# EUROPEAN PATENT SPECIFICATION

(11) **EP 3 907 040 B1**
(45) Date of publication and mention of the grant of the patent: **27.07.2022**
(21) Application number: 21172889.4
(22) Date of filing: 07.05.2021
(51) Int. Cl.: B23Q 11/00, B23Q 17/09, B25F 5/00

(54) **REAL-TIME MONITORING OF USAGE AND WEAR OF TOOLS FOR MECHANICAL MACHINING FOR INTELLIGENT MANAGEMENT THEREOF**
ECHTZEITÜBERWACHUNG DES GEBRAUCHS UND DES VERSCHLEISSES VON WERKZEUGEN ZUR MECHANISCHEN BEARBEITUNG FÜR DEREN INTELLIGENTE VERWALTUNG
SURVEILLANCE EN TEMPS RÉEL DE L'UTILISATION ET DE L'USURE DES OUTILS D'USINAGE MÉCANIQUE POUR LEUR GESTION INTELLIGENTE

(30) Priority: 07.05.2020 IT 202000010255
(43) Date of publication of application: 10.11.2021
(73) Proprietor: Leonardo S.p.a., 00195 Roma (IT)
(72) Inventor: GALLO, Nicola, 74023 GROTTAGLIE (TA) (IT); CORVAGLIA, Stefano Giuseppe, 74023 GROTTAGLIE (TA) (IT); FUGGIANO, Danila, 74023 GROTTAGLIE (TA) (IT)
(74) Representative: Bergadano, Mirko

(56) References cited:
- EP-A1- 1 369 811
- DE-A1-102013 016 068

## Description

### Technical Field of the Invention

The present invention relates, in general, to the field of tools for mechanical machining, such as, for example, drill bits, milling cutters, cutting discs, etc., and in particular, the invention relates to monitoring usage and wear of tools for mechanical machining for an intelligent management thereof.

### Background of the Invention

The term Industry 4.0 is more and more frequently used to indicate the radical paradigm shift that the manufacturing sector is facing in recent years thanks to the spread of digital technologies and their integration into the production chain.

In Industry 4.0, big data, robots, data analytics, and communication over the Internet are spreading into factories and streamlining the production process, making it more efficient, dynamic, and adaptable to market needs.

In addition to the technological element, however, in factories 4.0 there is also a change in the human workforce, which is becoming increasingly specialised in order to "talk" with the digital technologies that drive the production process.

Industry 4.0 stems from the fourth industrial revolution, the process that will lead to fully automated and interconnected industrial production, and in which the fundamental element of the fourth industrial revolution is the systematic application of the IoT (Internet of Things) technology to production processes on a global scale.

In particular, according to a report by a multinational consulting firm, new digital technologies will have a profound impact within four development directions: the first concerns the use of data, computing power and connectivity, and is declined in big data, open data, IoT, machine-to-machine and cloud computing for the centralization of information and its storage.

The second is analytics: once the data are collected, value is to be derived therefrom. Today only a modest percentage of the data collected is used by companies, which could instead obtain advantages from "machine learning", i.e. from the machines that improve their performance by "learning" from the data they collect and analyse.

The third line of development is the human-machine interaction, which involve touch-sensitive interfaces and which are becoming increasingly popular, and the augmented reality.

Finally, there is a whole sector that deals with the transition from digital to "real" and that comprises additive manufacturing, 3D printing, robotics, communications, machine-to-machine interactions and new technologies to store and use energy in a targeted way, rationalising costs and optimising performance.

In the field of mechanical machining, the introduction of these technologies is still relatively in its infancy.

In this field of technology, the quality of mechanical machining, especially if it is a precision machining, depends significantly on the wear of the tools used, so that a precise and continuous monitoring of their wear is certainly one of the fundamental factors to ensure the respect of high quality standards.

In addition to this, excessive tool wear can cause tool breakage, which can lead to dangerous situations for the safety of the operators, as well as increasing machining costs.

For this reason, continuous monitoring of the progression of tool wear over time is another fundamental factor for guaranteeing compliance with the safety standards required in mechanical machining, as well as for intervening promptly in the event of excessive wear in order to carry out the necessary tool reconditioning operations that could improve tool quality and/or prevent breakage and, consequently, avoid unnecessary additional costs for tool replacement.

Usually, the punctual wear of a tool is the subject of visual assessments by the operator, just as its progression over time is often the subject of empirical characterization based on tribological tests.

The subjectivity of this type of assessments represents a variable that can give rise to assessment errors that can negatively affect, sometimes significantly, both the quality and the safety of mechanical machining, as well as the quality and safety of usage of the product in which such a component is used, which can also have important implications in terms of civil and criminal liability for the consequences of any malfunctioning of the product in which such a component is used due to the poor quality of the mechanical machining carried out with a worn tool.

Some of the technologies proposed in the patent literature for monitoring the wear condition of tools for mechanical machining are by way of example described in US 4,471,444 A, US 4,694,686 A, US 5,904,457 A, and US 10,005,167 A1. It is also known from DE 10 2013 016068 A1 and EP 1 369 811 A1 to estimate the residual service life of the tool or the exhaustion of the service life thereof based on the number of cycles performed only.

### Object and Summary of the Invention

The Applicant has been able to ascertain that the computerization of tool management is now an indispensable process for mechanical companies, thus allowing them to have constant visibility of the status, quantity, location and residual service life of each tool.

However, the Applicant has also been able to ascertain that the methodologies and technologies known to them, although there is no reason to doubt that they may be satisfactory under certain respects, still present significant margins for improvement, in particular from the point of view of their integration with the new paradigm introduced by Industry 4.0, so as to allow for an integrated and intelligent management of tools that may be quite numerous.

Therefore, the present invention aims at making available an IoT technology which enables the computerization of tool management, thus allowing, on the one hand, to carry out a precise and reliable monitoring of the usage and wear of tools for mechanical machining and an integrated and intelligent management of tools and, on the other hand, to be easily usable also in application contexts natively lacking such technology.

According to the present invention, an electronic tool monitoring system to monitor usage and wear of tools for mechanical machining and an electronic tool management system are provided, as claimed in the appended claims.

### Brief Description of the drawings

Figure 1 schematically shows an electronic tool management system of the invention.
Figure 2 schematically shows an electronic system to monitor usage and wear of a tool of the invention.
Figure 3 shows a block diagram of an electronic device to monitor usage and wear of a tool of the invention.
Figure 4 shows a block diagram of a tool management centre of the invention.
Figure 5 shows a block diagram of a tool dispensing station of the invention.

### Detailed description of preferred embodiments of the invention

The present invention will now be described in detail with reference to the accompanying drawings to enable a skilled person to realize and use it. Various modifications to the embodiments presented shall be immediately clear to persons skilled in the art and the general principles disclosed herein could be applied to other embodiments and applications but without thereby departing from the scope of protection of the present invention as defined in the appended claims. Therefore, the present invention should not be considered limited to the embodiments described and shown, but should be granted the widest protective scope in accordance with the appended claims.

Where not otherwise defined, all the technical and scientific terms used herein have the same meaning commonly used by persons of ordinary skill in the field pertaining to the present invention. In the event of a conflict, this description, including the definitions provided, shall be binding. Furthermore, the examples are provided for illustrative purposes only and as such should not be considered limiting.

In particular, the block diagrams included in the accompanying figures and described below are not to be understood as a representation of the structural characteristics, or constructive limitations, but must be interpreted as a representation of functional characteristics, properties that is, intrinsic properties of the devices and defined by the effects obtained or functional limitations that can be implemented in different ways, therefore in order to protect the functionalities thereof (possibility of functioning).

In order to facilitate understanding of the embodiments described herein, reference will be made to some specific embodiments and a specific language will be used to describe them. The terminology used herein is for the purpose of describing only particular embodiments, and is not intended to limit the scope of the present invention.

Moreover, for the sake of descriptive convenience, the following description will refer, without losing generality, to a tool for mechanical machining in the form of a drill bit, which represents one of the many advantageous applications of the present invention.

The idea behind the present invention is to instrument tool driving devices with a lightweight and reliable sensory technology to collect information indicative of tool usage, so as to be able to real-time quantify not only their actual usage but also their wear, so as to be able to implement an intelligent tool management that enables compliance with expected quality and safety standards.

In the attached Figures, an electronic tool monitoring system is schematically shown according to a preferred embodiment of the invention, which is particularly suitable to be used with tools and relative driving apparatuses natively lacking this monitoring technology and any predisposition to allow its usage, so as to allow all tools and relevant driving devices already marketed or produced to be retrofitted.

Furthermore, in the preferred embodiment of the invention shown in the appended Figures, for the sake of illustrative convenience the tools are shown in the form of drill bits suitable to be operated by corresponding hand-held driving apparatuses in the form of drills, which may indifferently be electric or pneumatic.

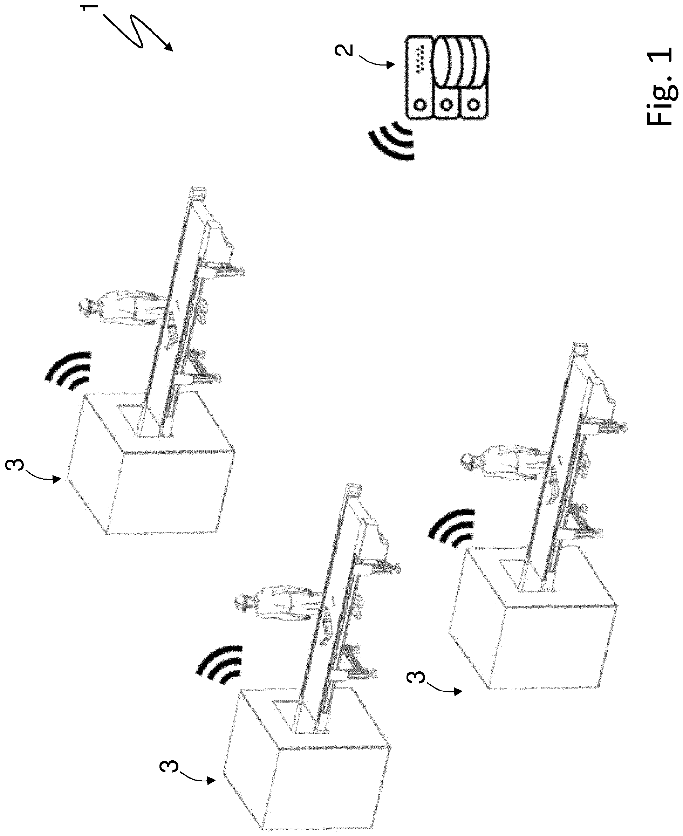

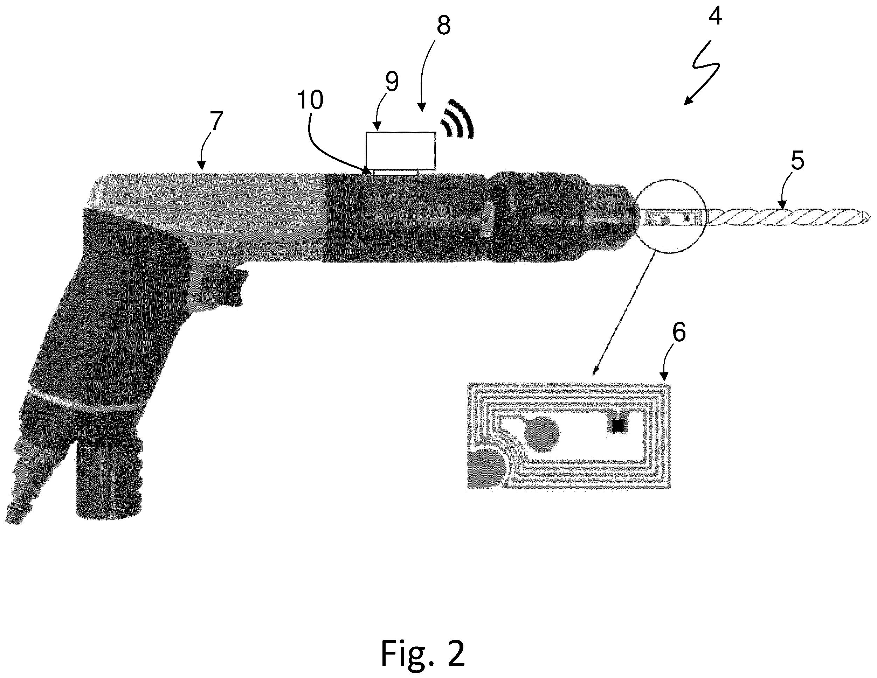

As shown in Figures 1 and 2, the electronic intelligent tool management system, referenced as a whole by reference numeral **1,** comprises:
- a tool management centre **2,**
- one or different tool collection and dispensing stations **3** communicatively coupled to the tool management centre **2,** and
- an electronic tool monitoring system **4** communicatively coupled to the tool management centre **2.**

Depending on the application context, the tool management centre **2** and the tool collection and dispensing station(s) **3** could be physically distinct entities located in different areas of a work environment, like in the embodiment shown in Figure 1, or constitute a single entity.

In the embodiment shown in Figure 1, the tool collection and dispensing stations **3** could, for example, be located in different parts of an operational area of a company in which mechanical machining operations are performed, while the tool management centre **2** could be remotely located with respect to the tool collection and dispensing stations **3,** e.g. in a management area of the company that houses the various Information and Communications (ICT) and management Technologies of the company's business processes, such as the Product Lifecycle Management (PLM) process, and the Enterprise Resource Planning (ERP) process.

As shown Figure 2, the electronic tool monitoring system **4** comprises, for each tool **5** to be monitored:
- a tag **6** to be applied to the tool **5** and to which a unique identifier **ID** is associated that uniquely identifies the tag **6** and, consequently, the tool **5** on which the tag **6** is applied, so as to allow the tool **5** to be distinguished from the other tools **5** managed by the electronic tool management system **1** and also provided with respective tags **5** to which respective unique identifiers **ID** are associated, and
- an electronic monitoring device **8** designed to be firmly and removably applicable to a driving apparatus **7** of the tool **5** to monitor usage and wear of a tool **5.**

The tag **6** may be realised according to any of the present or future technologies suitable for the purpose and the specific environmental and operational conditions of the application.

In a preferred embodiment shown in Figure 2, the tag **6** is based on radio frequency identification (RFID) technology and, hence, is realised in the form of an electronic tag, commonly known as an RFID tag, which is conveniently passive, adhesive, and flexible so as to be easily applicable and to fit the outer surface of the tool **5**, and in which the unique identifier **ID** is stored.

Alternatively, the tag **6** could be based on the optical reading technology and, thus, is realised in the form of a traditional non-electronic adhesive and flexible tag, on which the unique identifier **ID** may be materialised in different ways.

In an embodiment, the unique identifier **ID** is materialised in the form of a barcode of any type. In particular, the barcode may be linear or, conveniently, two-dimensional or in the form of a matrix, also known as QR code.

As an alternative or in addition to its materialisation in the form of a barcode of any type, the unique identifier **ID** may be materialised in any other form, for example in the form of an alphanumeric string of a specified length.

In an embodiment, in addition to the unique identifier **ID**, additional data may be stored or encoded in the tag **6**, depending on whether the tag **6** is in the form of an RFID or of a barcode, respectively, which additional data is indicative of the tool **5** and/or its service or useful life (durability) and may conveniently be expressed in terms of maximum limits of usage of the tool **5**. Conveniently, the maximum limits of usage of the tool **5** may in turn be expressed in terms of maximum wear of the tool **5**, of the maximum number of mechanical machining operations for which the tool **5** may be used, and/or the maximum time for which the tool **5** may be used to perform mechanical machining operations, or any other suitable quantities representing the maximum allowable usage of the tool **5**, and having exceeded one or more of which, according to a proprietary criterion, the tool **5** must necessarily be subjected to a reconditioning process, if possible, or otherwise be disposed of.

The electronic monitoring device **8** comprises a protective casing **9** designed to allow the electronic monitoring device **8** to function properly and reliably under application-specific environmental and operational conditions.

The casing **9** is further designed so that the electronic monitoring device **8** is easily firmly applicable to, and equally easily removable from, the driving apparatus **7** of the tool **5**, so as to be replaceable with another, repairable in case of failure or periodically maintained.

In particular, the casing **9** may be provided with a fixing device **10**, which is integrated in the casing **9** or separate from the casing **9** and mountable thereon to allow the casing **9** to be able to be firmly, but removably, fixed on the driving apparatus **7** of the tool **5.**

For example, the fixing device **10** may be of a type comprising a mechanical attachment interface carried by the casing **9** and shaped to couple with a corresponding mechanical attachment interface carried by the driving apparatus **7** of the tool **5**, or may be of a type provided with a series of coupling members capable of clinging to the casing of the driving apparatus **7** of the tool **5**.

The electronic monitoring device **8** is further designed to be self-contained and stand-alone, i.e., to have or contain within it all that is necessary to perform the functions for which it is designed and to be able to function without requiring the need for external resources.

To this purpose, the electronic monitoring device **8** is designed so as to be provided with hardware (processing, storage and communication) and software resources so that it can function independently and autonomously on its own, without requiring external hardware resources, and in particular hardware resources of the driving apparatus **7** to which it is applied.

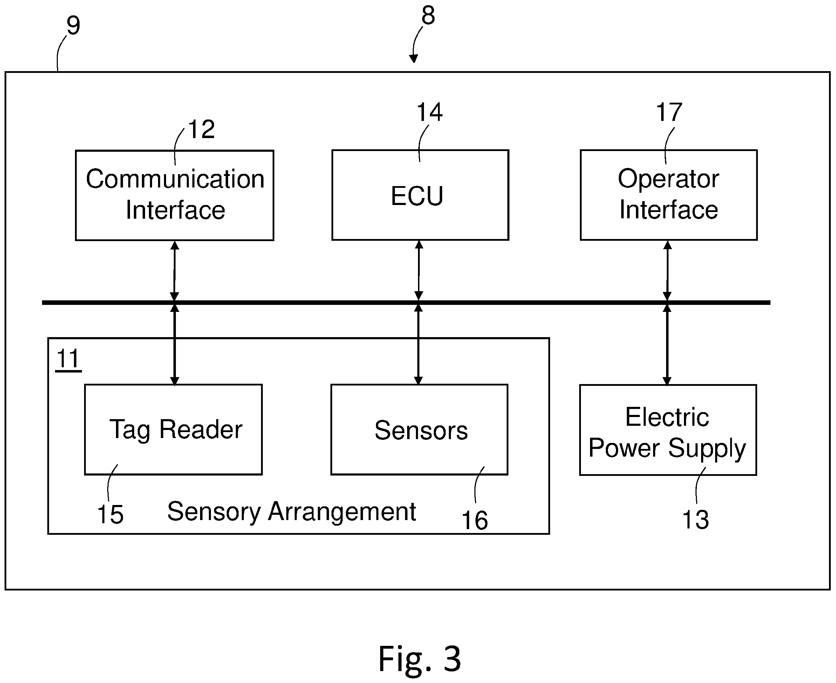

As shown in Figure 3, the electronic monitoring device **8** further comprises, housed within the casing **9**:
- an electronic sensory arrangement **11** to allow the tool **5** to be identified, usage of the tool **5** to be monitored, and wear of the tool **5** to be estimated;
- an electronic communication interface **12** to enable the electronic monitoring device **8** to communicate with the tool management centre **2**;
- an electric power supply device **13** to electrically power electrical and electronic components of the electronic monitoring device **8**; and
- an electronic control unit **14**, conveniently in the form of a microcontroller (MCU), electrically connected to the electronic sensory arrangement **11**, the electronic communication interface **12**, and the electric power supply device **13** and programmed to control operation of the electronic monitoring device **8** so as to identify, monitor the usage and estimate the wear of the tool **5**, based on information provided by the electronic sensory arrangement **11** and to locally store and transmit to the tool management centre **2** data indicative of identity, usage and wear of the tool **5**, in the manner described in more detail below.

The sensory electronic arrangement **11** is designed to measure, and output electrical outputs representative of, physical quantities that allow the electronic control unit **14** to identify the tool **5** and to estimate its wear and to quantify its usage in terms of, for example, the number and duration of machining cycles performed by the tool **5**, the number of single operations performed by the tool **5** during each machining cycle and the duration of each operation, and any other data useful for quantifying the usage of the tool **5**.

In particular, for the purpose of identifying the tool **5**, the sensory electronic device **10** comprises a tag reader **15** operable by the electronic control unit **13** to read the unique identifier **ID** of the tag **6**.

The tag reader **15** is based on a present or future technology corresponding to that of the tag **6.**

In particular, in the embodiment in which the tag **6** is an RFID tag, the tag reader **15** is an RFID reader operable by the electronic control unit **14** to query the tag **6,** to receive the unique identifier **ID** stored in the RFID tag **4** and transmitted thereby in response to the query from the tag reader **15,** and to send the received unique identifier **ID** to the electronic control unit **13,** where it is appropriately stored in storage resources of the electronic control unit **14.**

In the embodiment in which the tag **6** is a non-electronic traditional tag on which the unique identifier **ID** is in the form of a linear barcode, the tag reader **15** is a common barcode reader based on optical technology, in particular laser technology.

In the embodiment in which the tag **6** is a non-electronic tradition tag on which the unique identifier **ID** is in the form of a QR code, the tag reader **15** is a common QR code reader, which, as is known, comprises a digital camera operable by the electronic control unit **14** to capture a digital image of the QR code and to transmit it to the electronic control unit **14,** where it can be processed to extract the unique identifier **ID** encoded in the QR code depicted in the received digital image.

In the embodiment in which the tag **6** is a non-electronic traditional tag on which the unique identifier **ID** is shown in any form other than a barcode, in the example described above in the form of an alphanumeric string, the tag reader **15** is an optical sensor conveniently based on imaging-based technology, i.e., in the form of a digital image capture sensor consisting of a common digital (micro)camera, for example a CCD (Charge-Coupled Device) or CMOS (Complementary Metal-Oxide-Semiconductor) (micro)camera, also known as an APS (Active Pixel Sensor) camera, operable by the electronic control unit **14** to capture an image of the alphanumeric string and to transmit it to the electronic control unit **14** so that it can be processed to extract the unique identifier **ID** encoded in the alphanumeric string depicted therein by an optical character recognition process.

For the purpose of monitoring the usage and wear of the tool 5, depending on the type of tool **5** and the mechanical machining to be performed, the electronic sensory arrangement **11** comprises one or a combination of the following transducers, all referenced to with the number **16:**
- an electroacoustic transducer (microphone) suitably arranged within the casing **9** to measure sound emissions produced by the tool **5** during mechanical machining and to output an electrical output indicative of the level of sound emissions;
- a vibration transducer, conveniently in the form of a piezoelectric accelerometer, suitably arranged within the casing **9** to measure mechanical vibrations produced by the tool **5** during machining and to output an electrical output indicative of the level of the mechanical vibrations;
- a proximity sensor, conveniently in the form of an infrared distance sensor, suitably arranged within the casing **9** to measure the distance and to output an electrical output indicative of the distance of the proximity sensor to a mechanical component to be mechanically machined, so as to allow the electronic control unit **14** to verify that the tool **5** is operated but not machining, but is instead actually carrying out a mechanical machining on the mechanical component and to compute the time taken to carry out the mechanical machining. In the considered example of a tool in the form of a drill bit, the electrical output of the proximity sensor is such as to allow the electronic control unit **14** to verify that the distance of the proximity sensor to the mechanical component to be drilled is lower than the distance of the proximity sensor from the distal end of the drill bit, thus allowing effective interpenetration of the drill bit into the mechanical component to be verified and the time taken by the drill bit to drill a hole to be computed;
- a passive infrared sensor (PIR) suitably arranged within the casing **9** to result in the tool **5** being within the field of view of the passive infrared sensor, so as to output an electrical output indicative of the intensity of the thermal energy emitted by the tool **5** in the form of infrared radiation during a mechanical machining;
- a gyroscope suitably arranged within the casing **9** to measure the rotational speed of the tool **5** and to output an electrical output indicative of the rotational speed;
- a load cell to measure force applied by the tool **5** to the mechanical component during mechanical machining and to output an electrical output indicative of the applied force; and
- a tactile button suitably arranged on the casing **9** so that it can be operated by an operator either at a start and at an end of a mechanical machining or be maintained pressed throughout the mechanical machining to indicate either start and end times of the mechanical machining or a duration thereof.

In an embodiment, the electronic monitoring device **8** may conveniently, but not necessarily, further be provided with an operator interface **17** connected to the electronic control unit **14** to allow an operator to interact with the electronic monitoring device **8.**

The operator interface **17** may conveniently comprise one or more of:
- an electronic display, for example a liquid crystal display, to display a variety of information useful to the operator, for example information relating to the operation of the electronic monitoring device **8,** the wear of the tool **5,** and, if applicable, the interventions to be carried out on the tool **5** and the associated driving apparatus **7**;
- one or more light indicators, for example LED indicators, capable of emitting light indications of different colours indicative of different wears of the tool **5**, wherein a green light indication may for example be indicative of wear of the tool **5** compatible with the mechanical machining to be carried out, a red light indication may for example be indicative of wear of the tool **5** incompatible with the mechanical machining to be carried out, and a yellow light indication may for example be indicative of wear of the tool **5** critical for the mechanical machining to be carried out;
- an audible warning device to convey to the operator the same indications provided by the light indicator(s), but in the form of audible signals, and
- one or more buttons associated with pre-set or programmable functions of the electronic monitoring device **8** and manually operable by an operator to implement associated functions, such as, for example, visualization on the electronic display of the above-mentioned information relating to the operation of the electronic monitoring device **8,** to the wear of the tool **5,** and to any intervention to be carried out on the same and on the associated driving apparatus **7** of the tool **5,** failure/emergency signals, the reset of the electronic monitoring device **8,** etc.

In an embodiment, the electronic monitoring device **8** may conveniently, but not necessarily, further comprise an additional electronic storage device (not shown) to provide the electronic monitoring device **8** with storage resources additional to those of the electronic control unit **14** and to locally store a variety of data, such as data indicative of wear of the tool **5** and its time progression, as well as its unique identifier **ID,** etc.

The electronic storage device may conveniently be in the form of a removable memory card, which, once removed, may be coupled to a personal computer to download the data contained herein and to transmit the downloaded data to the tool management centre **2** over the Internet or via a dedicated connection.

The electronic communication interface **12** is based on any present or future communication technology that allows the electronic communication interface **12** to communicate with the tool management centre **2.**

Conveniently, the electronic communication interface **12** is designed to communicate with the tool management centre **2** based on one or more of the following communication technologies:
- one or different short-range wireless (radio or optical) communication technologies including, conveniently, Wi-Fi technology, via which the communication electronic interface **12** may communicate with the tool management centre **2** via a wireless local area network (WLAN), or, in addition to or as an alternative to Wi-Fi technology, ZigBee technology, Bluetooth technology, for example that according to specification 4.0 and also known as Bluetooth Low Energy, Bluetooth LE or Bluetooth Smart, which also provides an e-beacon functionality that facilitates the pairing procedure and via which the electronic communication interface **12** may communicate with the tool management centre **2** via a personal mobile device, such as a smartphone, present within its communication range and belonging, for example, to the operator who is using the tool **5;**
- one or different long-range wireless (radio or optical) communication technologies comprising one or more of 3G, 4G, 5G, etc. cellular communication technologies; and
- a wired communication technology, conveniently the USB (Universal Serial Bus) technology, which, as is known, comprises special connectors, known as USB connectors or ports, which are connectable to other USB connectors through special cables known as USB cables.

The electric power supply device **13** may be an external electric power supply or, conveniently, a self-contained electric power supply, or both.

If of the external power supply type, the electrical power supply device **13** comprises a suitable electrical power connector for connection to an external electrical power source via a suitable connecting cable, and an internal electrical power supply stage connected to the electrical power connector and designed to output a stabilized electrical voltage suitable to power the electrical and electronic components of the electronic monitoring device **8.**

If of the self-contained power supply type, the electrical power supply device **13** comprises an internal electrical power source designed to output an electrical voltage suitable to power the electrical and electronic components of the electronic monitoring device **8.**

The internal power source may be either electrically non-rechargeable or electrically rechargeable.

When of the electrically rechargeable type, the internal electrical power source comprises an electrical energy storage device or electrical battery, conveniently of the Lithium-Polymer (LiPO) type and provided with an electrical charging device designed to be connectable to an external electrical power source via an electrical connector and to electrically recharge the electrical battery using electrical energy drawn from the external electrical power source.

In a more advanced embodiment, as an alternative to or in addition to the connection to an external electrical power source, the internal electrical power source may (also) be provided with an electrical charging device designed to electrically recharge the electrical battery by exploiting vibrational energy developed during a mechanical machining.

In a further, more advanced embodiment, as an alternative or in addition to the connection to an external electrical power source, the internal electrical power source may (also) be provided with an electrical recharging stage designed to wirelessly or inductively recharge the electrical battery by exploiting RF energy contained in electromagnetic signals captured via a suitable RF antenna.

The electronic control unit **14** is programmed to:
- store data indicative of a service life of the tool **5** conveniently expressed in terms of maximum usage limits of the tool **5,** which may conveniently be expressed in turn in terms of maximum wear of the tool **5,** the maximum number of mechanical machining operations for which the tool **5** may be used and/or the maximum time for which the tool **5** may be used to perform mechanical machining operations, or any other quantities suitable for representing the maximum allowable usage of the tool **5,** and having exceeded one or more of which, according to a proprietary criterion, the tool **5** must necessarily be subjected to a reconditioning process, if possible, or otherwise be disposed of;
- monitor the usage of the tool **5** in terms of number of mechanical machining operations performed by the tool **5** and/or time of usage of the tool **5,** and estimate the current wear of the tool **5** from the start of a mechanical machining cycle, based on the output of the electronic sensory device **10;**
- estimate, based on the usage and estimated wear of the tool **5** and of the stored maximum usage limits of the tool **5,** a residual service life of the tool **5** in terms of, for example, a residual number of mechanical machining operations that can still be performed by the tool **5** and/or a residual time of usage of the tool **5** and/or a residual wear of the tool **5;**
- if the service life of the tool **5** is determined not to be exhausted and, hence, the tool **5** can still be used for further mechanical machining operations, provide the operator with information on the residual service life of the tool **5** via the electronic display and/or the light indicators and/or the audible warning device of the operator interface **17**; and
- if instead the service life of the tool **5** is determined to be exhausted and, hence, the tool **5** can no longer be used to perform subsequent mechanical machining operations, carry out one or more different interventions intended to cause the mechanical machining cycle in progress to be interrupted due to the exceeding of one or more of the stored maximum usage limits, and in particular:
   ∘ notify the operator, via the electronic display and/or light indicator and/or audible warning device of the operator interface **17,** of a need to immediately interrupt use the tool **5;** and
   ∘ intervene directly on the driving apparatus **7** of the tool **5** to interrupt operation thereof, if the specific application allows it, for example by sending, via the electronic communication interface **12,** a closing command to an on/off solenoid valve arranged along a duct that supplies compressed air to the driving apparatus **7** of the tool **5** and predisposed for this purpose, that is, designed to receive opening and closing commands and to change its operating state accordingly; and
- transmit to the tool management centre **2,** via the electronic communication interface **12,** and store locally, in its internal memory or in the additional electronic storage device, if provided, the unique identifier **ID** of the tag **6** associated with the tool **5** and data indicative of either the residual service life of the tool **5** or exhaustion of the service life of the tool **5.**

Exhaustion of the service life of the tool **5** may be determined based on a proprietary criterion based on exceeding one or more of the stored maximum usage limits, each of which may be given the same weight in determining the exhaustion of the service life of the tool **5,** so that the maximum usage limits affect the same way in determining the exhaustion of the service life of the tool **5,** or different weights so that the maximum usage limits may affect the exhaustion of the service life of the tool **5** differently.

The electronic control unit **14** may be further programmed to receive from the tool management centre **2,** via the electronic communication interface **12,** operation interruption commands, which, once executed, cause the operator to be notified, via the electronic display and/or the light indicators of the user interface **17,** of a need for the cycle of mechanical machining operations in progress to be interrupted due to exceeding the maximum limits allowed for the usage and/or wear of the tool **5.**

The maximum usage limits of the tool **5** may be independent of the mechanical machining operations for which the tool **5** is suitable, and, hence, unique for all the mechanical machining operations for which the tool **5** is suitable, or may be specific to the mechanical machining operations for which the tool **5** is suitable, and, hence, be different for the different mechanical machining operations for which the tool **5** is suitable.

The maximum usage limits of the tool **5** may be provided to the electronic monitoring device **8** in a number of ways, for example, as previously described, be stored in the tag **6** associated with the tool **5** and read by it together with the unique identifier **ID** of the tag **6,** or may be transmitted from the tool management centre **2** to the electronic monitoring device **8** via the electronic communication interface 12.

To identify the tool **5,** if the unique identifier **ID** of the tool **5** is stored in an RFID tag **6,** the electronic control unit **14** is programmed to operate the tag reader **15** and receive the unique identifier **ID** read from the tag **6.** If, on the other hand, the unique identifier **ID** of the tag **6** is in the form of a QR code or alphanumeric string, the electronic control unit **14** is programmed to receive the digital image of the QR code or of the alphanumeric string captured by the digital camera and to process it to decode the QR code and extract the unique identifier **ID** encoded therein, in a manner known and therefore not described in detail, or to recognize the unique identifier **ID** represented by the alphanumeric string through an optical character recognition process.

To estimate the usage of the tool **5,** the electronic control unit **14** is programmed to determine the number and the duration of the machining cycles performed by the tool **5,** the number of mechanical machining performed during each mechanical machining cycle, and the time taken to perform each mechanical machining.

The electronic control unit **14** is programmed to estimate the wear of the tool **5** based on one or a (linear and non-linear) combination of the following quantities:
- time of usage of the tool **5** under operating conditions typical of the mechanical machining to be carried out, in the considered example of a drill bit, the time of rotation of the drill bit with a speed higher than a threshold speed and with a distance (measured by the proximity sensor) to the mechanical component to be drilled lower than the distance from the distal end of the drill bit, these latter conditions being indicative of an effective interpenetration of the drill bit in the mechanical component to be drilled;
- vibrations produced by mechanical machining measured by the vibration sensor in a given frequency range with amplitude above a given threshold; and
- noise or sound produced by mechanical machining in a given frequency range.

The data indicative of the estimated usage, wear, and residual service life of the tool **5** may be transmitted to the tool management centre **3** according to a proprietary criterion conveniently aimed at maximising the electrical autonomy of the electronic monitoring device **8.** For example, the usage and wear data may be transmitted at the end of each single mechanical machining, in a data packet, so that the tool management centre **3** is real-time updated on the usage and wear of the tool **5,** or, conveniently, all the data packets relative to the individual mechanical machining operations may be transmitted all at once, for example at the end of each single machining cycle, or periodically, for example every hour, or at the end of each work shift, or again at the end of each work day, or when the memory capacity of the electronic monitoring device **5** is close to being exhausted.

Each data packet and/or each transmission of a data packet is conveniently time-stamped with a timestamp indicative of the date and time of generation/transmission to allow generation/transmission to be ascertained and traced.

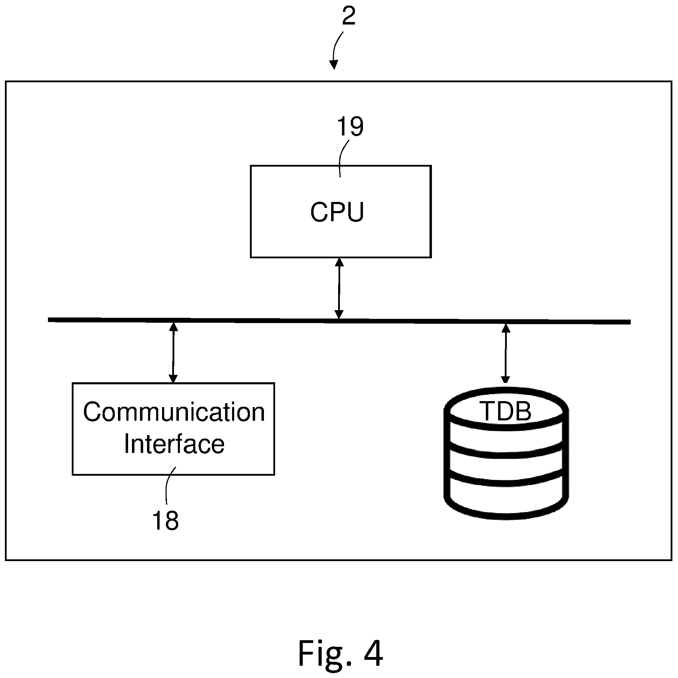

As shown in Figure 4, the tool management centre **2** comprises:
- an electronic communication interface **18** configured to communicate with electronic communication interfaces **12** of electronic monitoring devices **8** to receive therefrom data indicative of either the residual service lives or exhaustion of service lives of the associated tools **5,** as well as with electronic communication interfaces, described later, of the tool collection and dispensing stations **3** to receive wear data therefrom;
- a tool database **TDB,** which may be stored in a dedicated electronic storage unit or in storage resources that are part of other business technologies, such as ICT, PLM or ERP; and
- an electronic data processing unit **19,** conveniently in the form of a server, configured to communicate with the electronic communication interface **18** to receive data received thereby and to access the tool database **TDB,** and to communicate with the tool collection and dispensing stations **3** to manage collection and dispensing of the tools **5** and the associated driving apparatuses **7** by the tool collection and dispensing stations **3** based on the received data and on data stored in the tool database **TDB.**

The communication electronic interface **18** may be based on any present or future communication technology that allows the communication electronic interface **18** to communicate with the communication electronic interfaces **12** of the electronic monitoring devices **8** and with the communication electronic interfaces of the tool collection and dispensing stations **3.**

The tool database **TDB** is structured to store, for each tool **5** managed by the tool management centre **2,** a corresponding data record containing data indicative of:
- the unique identifier **ID** of the tool **5,**
- the service life of the tool **5,** after exhaustion of which the tool **5** should be subjected to reconditioning or otherwise disposed of,
- the residual service life of the tool **5** transmitted by the electronic monitoring device **8** associated with the tool **5,**
- the mechanical machining operations for which the tool **5** is suitable,
- the collection and dispensing station **3** in which the tool **5** is located,
- any lack of availability of the tool **5** due to resharpening/reconditioning or disposal.

The electronic data processing unit **19** is configured to populate and keep the tool database **TDB** updated and for this purpose it is configured to:
- process data received from the electronic monitoring devices **8** and from the tool collection and dispensing stations **3** to estimate residual service lives of the tools **5** and to manage reconditioning and disposal of the tools **5** whose service lives have exhausted; and
- keep the tool database **TDB** updated with the estimated residual service lives of the tools **5** and with information on lack of availability of the tools **5** due to reconditioning or disposal.

The electronic data processing unit **19** may also be configured to compute appropriate analytics based on the usage and wear data received from the electronic monitoring devices **8,** such as, for example, statistics allowing the most frequent causes of tool breakage to be diagnosed, or to assess, based on Artificial Intelligence (AI) algorithms trained based on the received data, any extensions to or shortenings of the service lives of the tools **5** for all or part of the mechanical machining operations for which the tools **5** are suitable, and then to update the tool database **TDB** accordingly and/or to download the data into specialized data mining or big data analytics systems.

The electronic data processing unit **19** may also be configured to interrupt operations of the driving apparatuses **7** of the tools **5** which, during a cycle of mechanical machining operations, exhaust their residual service lives.

To this end, the electronic data processing unit **19** may be configured to send the electronic monitoring devices **8,** via the electronic communication interfaces **12** and **18,** operation interruption commands, which, when received and executed by the electronic control units **14** of the electronic monitoring devices **8,** cause the electronic control units to implement one or more of the following interventions to cause operations of the tools **5** to be interrupted:
- notify the operators, via the operator interfaces **17,** of a need to interrupt the use of the tools **5,** and
- intervene directly on the driving apparatuses **7** of the tools **5** to interrupt operations thereof.

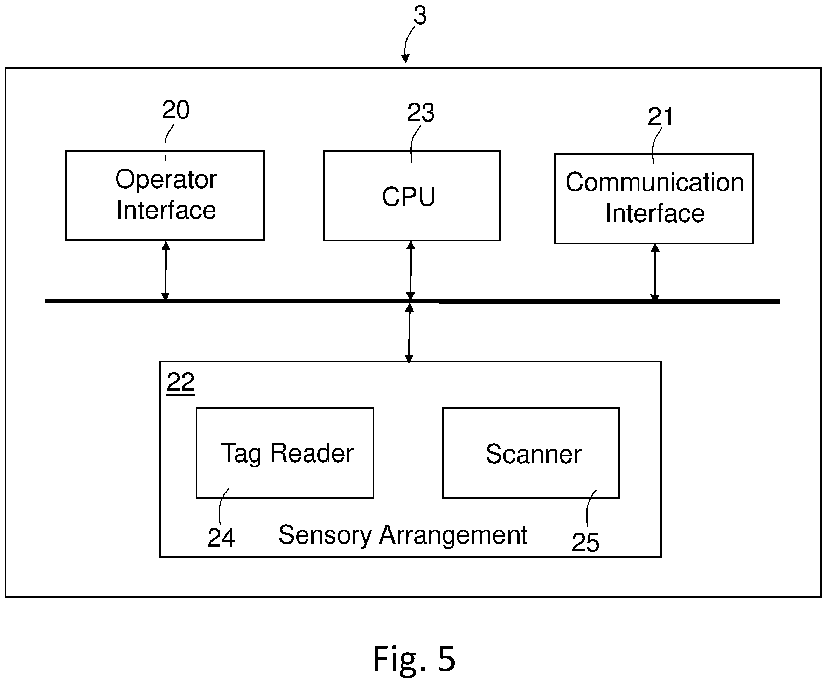

As shown in Figure 5, each tool collection and dispensing station **3** comprises:
- an electronic operator interface **20** through which operators can submit requests for tools **5** to perform mechanical machining operations, possibly in conjunction with the associated driving apparatuses **7;**
- a electronic communication interface **21** to communicate with the communication electronic interface **18** of the tool management centre **2** and possibly with the communication electronic interfaces **12** of the electronic monitoring devices **8;**
- a sensory arrangement **22** to allow returned tools **5** to be identified and usage thereof to be monitored; and
- an electronic control unit **23,** conveniently also in the form of a server, configured to communicate with the electronic operator interface **20,** the electronic communication interface **21,** and the sensory arrangement **22** and to manage collection and dispensing of tools **5** and associated driving apparatuses **7** based on the received requests for tools **5,** as described below.

The electronic operator interface **20** is configured to allow operators to submit requests for tools **5** and associated driving apparatuses **7** to perform mechanical machining operations using any present or future technologies suitable for the purpose.

By way of example, the electronic operator interface **20** may be in the form of a touch-sensitive display on which a suitable Graphical User Interface (GUI) is displayed through which operators can enter their own identification data, identification data of the mechanical machining operations to be carried out, and identification data of the tools **5** and driving apparatuses **7** they require, for example by selecting them in special drop-down menus or by manually entering the associated identification codes.

Alternatively, the electronic operator interface **20** may be in the form of a series of readers comprising a badge reader, by means of which identification data of the operators contained in their personal badges can be read, or a biometric reader, by means of which biometric parameters of the operators may be measured and, based thereon, the operators can be identified, and a QR code reader, by means of which one or more QR codes printed on the machining sheets and identifying the mechanical machining to be carried out and the tool **5** and the relative driving apparatus **7** to be used can be read.

The electronic communication interface **21** is based on any present or future communication technology that allows the electronic communication interface **21** to communicate with the electronic communication interface **18** of the tool management centre **2**.

The sensory arrangement **22** comprises:
- a tag reader **24** similar to the tag readers **15** of the electronic monitoring devices **8** to read unique identifiers **ID** of the tags **6** associated with returned tools **5**; and
- a tool scanning sensor **25** based on any present or future scanning technology that allows wears of the returned tools **5** to be estimated.

In an embodiment, the tool scanning sensor 25 may conveniently be based on imaging technology, i.e., in the form of a digital image capture sensor comprising a common digital camera, e.g., a CCD or CMOS camera, operable by the electronic control unit 23 to capture and send to the electronic control unit 23 one or several digital images of the tools 5 when they are returned by the operators, so that the captured digital images may then be processed by the electronic control unit 23 to objectively estimate wear of the tools 5 based on the captured digital images.

In a different embodiment, the tool scanning sensor **25** may be conveniently based on laser technology, i.e., in the form of a laser scanner (also known as a 3D laser) that allows detection of three-dimensional tool models **5** at different scales and resolutions.

The electronic control unit **23** is configured to manage collection of tools **5** that are returned, and for this purpose it is configured to:
- receive and process the output of the sensory device **22** to identify the returned tools **5** and estimate wears thereof; and
- communicate, via the electronic communication interfaces **21** and **18,** with the tool management centre **2** to provide data indicative of the unique identifiers **ID** of the tags **6** associated with the returned tools **5.**

As regards the driving apparatuses **7** of the tools **5,** their collection could be managed by the same tool collection and dispensing station **3** that manages the collection of the relative tools **5,** or by a different collection station specifically dedicated for this purpose. For this purpose, the driving apparatuses **7** of the tools **5** could also be conveniently provided with identification tags identical to the tags **6** used to identify the tools **5.**

The electronic control unit **23** is further configured to manage dispense of tools **5** and for this purpose is configured to:
- receive requests for tools **5** submitted by operators via the electronic operator interface **20** and each containing data identifying the operator who submitted the request, a mechanical machining operation to be performed, and a tool **5** to be used to carry out the indicated mechanical machining;
- verify whether the requested tools **5** are suitable to perform the indicated mechanical machining operations and whether tools **5** are available in the tool collection and dispensing station **3** that match the requested ones and whose residual service lives are sufficient to perform the indicated mechanical machining operations;
- if it is determined either that the requested tools **5** are unsuitable to perform the indicated mechanical machining operations or that no tools **5** are available in the tool collection and dispensing station **3** that match the requested ones or that tools **5** are available in the tool collection and dispensing station **3** that match the requested ones but whose residual service lives are insufficient to perform the indicated mechanical machining operations:
   ∘ prevent the tool collection and dispensing station **3** from delivering the requested tools **5;** and
   ∘ cause the operators who submitted the requests to be duly notified; and
- if it is determined that the requested tools **5** are suitable to perform the indicated mechanical machining operations and that tools **5** are available in the tool collection and dispensing station **3** that match the requested ones and whose residual service lives are sufficient to perform the indicated mechanical machining operations, cause the tools **5** to be dispensed to the operators who submitted the requests, for example through a conveyor belt connecting a tool magazine to a collection and dispensing station **5.**

Verification whether or not the requested tools **5** are suitable to perform the indicated mechanical machining operations and whether or not tools **5** are available in the tool collection and dispensing station **3** that match the requested ones may be carried out according to two different architectural approaches: a first one in which the tool database **TDB** is the only tool database of the electronic tool management system **1** and, hence, represents a centralised tool database **TDB** and, hence, the electronic control unit **23** communicates with the tool management centre **2** to access the data contained therein; and a second one in which copies of parts of the tool database **TDB** are kept in the tool collection and dispensing stations **3,** each of which contains only the data of the tools **5** in tool collection and dispensing station **3.**

In the first approach, the electronic control unit **23** is thus configured to:
- communicate, via the electronic communication interfaces **21** and **18,** with the tool management centre **2** to access the tool database **TDB** and, based on the data contained therein for the various tools **5:**
   ∘ verify whether or not the requested tools **5** are suitable to perform the indicated mechanical machining operations, and whether or not tools **5** are available in the tool collection and dispensing station **3** that match the requested ones;
   ∘ verify whether the residual service lives of the tools **5** that match the requested ones and determined to be suitable for, and available to, perform the indicated mechanical machining operations are such as to allow the tools **5** to perform the indicated machining cycles;
   ∘ identify, among the tools **5** that match the requested ones and are suitable to, and available to, perform the indicated mechanical machining operation and whose residual lives have been determined to be such as to allow the tools **5** to perform the indicated mechanical machining operations, specific tools **5** to be dispensed to the operators who requested them based on a certain proprietary criterion, for example aimed at keeping tool wear as uniform as possible; and
   ∘ update in the tool database **TDB** the data records of the delivered tools **5** and the information about the operators who requested them.

In the second approach, a local tool database **TDB** is further kept in each tool collection and dispensing station **3** which contains a copy of the data of the tools **5** in the tool collection and dispensing station **3** contained in the centralised tool database **TDB** and, hence, the electronic control unit **23** is then configured to access the local tool database **TDB** and, based on the data contained therein for the various tools **5,** to implement the same operations as previously described and then to communicate with the tool management centre **2** to update the data records of the delivered tools **5** in the tool database **TDB.**

Similarly to what has been said about their collection, the dispensing of the driving apparatuses **7** of the tools **5** may be managed by the same tool collection and dispensing station **3** that manages the dispensing of the tools **5,** or by a different dispensing station specifically dedicated to this purpose, implementing operations similar to those previously described in relation to the tools **5.**

Based on the foregoing, it may be appreciated that the present invention enables all of the objectives set forth herein to be achieved.

In particular, the present invention enables the retrofitting of all tools and relative driving devices already marketed or manufactured, so as to allow their precise and reliable monitoring of usage and wear even if natively lacking this monitoring technology and any provision to allow the adoption thereof.

Furthermore, the present invention enables to realise an integrated, intelligent and scalable management of tools of any size, ensuring the strict compliance with any quality and safety standard, even the most stringent, provided for in this field of technology.

The Applicant has been able to ascertain that the methodologies and technologies known to him, although there is no reason to doubt that they may be satisfactory in certain respects, still present significant margins for improvement, in particular in terms of their integration with the new paradigm introduced by Industry 4.0, so as to allow for an integrated and intelligent management of tools that may be quite numerous.

The present invention therefore aims at providing an IoT technology which, on the one hand, allows to carry out a precise and reliable monitoring of the usage and wear of the tools for mechanical machining operations and an integrated and intelligent management of tools and which, on the other hand, can be easily used also in application contexts natively lacking such technology.

## Claims

1. An electronic tool monitoring system (**4**) to monitor usage and wear of tools (**5**) for mechanical machining;
the electronic tool monitoring system (**4**) comprises, for each tool (**5**) to be monitored:
- a tag (**6**) to be applied to the tool (**5**) and with a unique identifier (**ID**) that allows the tool (**5**) to be distinguished from other tools (**5**); and
- a self-contained and stand-alone electronic monitoring device (**8**) designed to be firmly and removably applicable to a tool driving apparatus (**7**) to monitor usage and wear of a tool (**5**) driven thereby;
the self-contained and stand-alone electronic monitoring device (**8**) comprises:
- an electronic sensory arrangement (**11**) to allow the tool (**5**) to be identified and usage and wear thereof to be monitored;
- an electronic communication interface (**12**) to communicate with a remote tool management centre (**2**);
- an electronic operator interface (**17**) to provide an operator with information on the tool (**5**); and
- an electronic control unit (**14**) electrically connected to the electronic sensory arrangement (**11**), the electronic communication interface (**12**) and the electronic operator interface (**17**) and programmed to:
∘ store data indicative of a service life of the tool (**5**),
∘ identify and monitor usage and wear of the tool (**5**) based on an output of the electronic sensory arrangement (**11**),
∘ estimate residual service life of the tool (**5**) based on monitored usage and wear of the tool (**5**) and on the stored data indicative of service life thereof;
- if service life of the tool (**5**) is determined not to be exhausted, provide the operator with information on the residual service life of the tool (**5**) via the electronic operator interface (**17**);
- if service life of the tool (**5**) is determined to be exhausted, implement one or more of the following interventions to cause operation of the tool driving apparatus (**7**) to be interrupted:
∘ notify the operator, via the electronic operator interface (**17**), of a need for operation of the tool driving apparatus (**7**) to be interrupted; and
∘ intervene directly on the tool driving apparatus (**7**) to interrupt operation thereof; and
- transmit to the tool management centre (**2**), via the electronic communication interface (**12**), the unique identifier (**ID**) of the tag (**6**) associated with the tool (**5**) and data indicative of either the estimated residual service life of the tool (**5**) or exhaustion of the service life thereof.

2. The electronic tool monitoring system (**4**) of claim **1**, wherein the tag (**6**) is based on either radio-frequency identification (RFID) technology or optical scanning technology, in particular imaging technology, and the electronic sensory arrangement (**11**) comprises a tag reader (**15**) to read the unique identifier (**ID**) associated with the tag (**6**) and based on radio-frequency identification (RFID) technology or, respectively, optical scanning technology, in particular imaging technology.

3. The electronic tool monitoring system (**4**) of claim **1** or **2**, wherein the electronic sensory arrangement (**11**) further comprises one or a combination of the following transducers to allow usage and wear of the tool (**5**) to be monitored:
- an electroacoustic transducer to measure sound emissions produced by the tool (**5**) during mechanical machining;
- a vibration transducer to measure mechanical vibrations produced by the tool (**5**) during mechanical machining;
- a proximity sensor to measure the distance of the proximity sensor to a mechanical component to be mechanically machined;
- a passive infrared sensor to measure thermal energy emitted in the form of infrared radiation by the tool (**5**) during mechanical machining,
- a gyroscope to measure rotational speed of the tool (**5**),
- a load cell to measure force applied by the tool (**5**) on a mechanical component being mechanically machined, and
- a tactile push-button operable by an operator either at a start and at an end of a mechanical machining or to be maintained pressed throughout the same to indicate either the moments in time of a start and of an end of the mechanical machining or duration thereof.

4. An electronic tool management system (**1**) comprising:
- a tool management centre (**2**);
- one or different tool collection and dispensing stations (**3**) in communication with the tool management centre (**2**); and
- an electronic tool monitoring system (**4**) according to any one of the preceding claims and for each tool (**5**) to be monitored.

5. The electronic tool management system (**1**) of claim **4**, wherein the tool management centre (**2**) comprises:
- an electronic communication interface (**18**) to communicate with electronic communication interfaces (**12**) of electronic monitoring devices (**8**) to receive data indicative of either the residual service life of the monitored tools (**5**) or exhaustion of service life thereof and transmitted by the electronic monitoring devices (**8**), and with electronic communication interfaces (**21**) of the tool collection and dispensing stations (3) to receive wear data transmitted thereby;
- a tool database (**TDB**); and
- an electronic data processing unit (**19**) configured to communicate with the electronic communication interface (**18**) to receive data received thereby and to access the tool database (**TDB**), and to communicate with the tool collection and dispensing stations (**3**) to manage collection and dispensing of the tools (**5**) by the tool collection and dispensing stations (**3**) based on the received data and on data stored in the tool database (**TDB**);
the tool database (**TDB**) is structured to store, for each tool (**5**) managed by the tool management centre (**2**), data indicative of:
- the unique identifier (**ID**) of the tool (**5**),
- the service life of the tool (**5**), after exhaustion of which the tool (**5**) should be subjected to reconditioning or otherwise disposed of,
- the residual service life of the tool (**5**) transmitted by the associated electronic monitoring device (**8**), and
- the mechanical machining operations for which the tool (**5**) is suitable,
- the collection and dispensing station (**3**) that is assigned with the task of collecting and dispensing the tool (**5**), and
- any lack of availability of the tool (**5**) due to reconditioning or disposal;
the electronic data processing unit (**19**) is further configured to:
- process data received from the electronic monitoring devices (**8**) and from the tool collection and dispensing stations (**3**) to estimate residual service lives of the tools (**5**) and to manage reconditioning and disposal of the tools (**5**) whose service lives have exhausted; and
- keep the tool database (**TDB**) updated with the estimated residual service lives of the tools (**5**) and information on lack of availability of the tools (**5**) due to reconditioning or disposal.

6. The electronic tool management system (**1**) of claim **5**, wherein the electronic data processing unit (**19**) of the tool management centre (**2**) is further configured to assess, based on Artificial Intelligence (AI) algorithms trained based on the received data, any extensions to or shortenings of the service lives the tools (**5**) for all or part of the mechanical machining operations for which the tools (**5**) are suitable and to update the tool database (**TDB**) accordingly.

7. The electronic tool management system (**1**) of claim **5** or **6**, wherein the electronic data processing unit (**19**) of the tool management centre (**2**) is further configured to send the electronic monitoring devices (**8**) operation interruption commands, which, when received and executed by the electronic control units (**14**) of the electronic monitoring devices (**8**), cause the electronic control units (**14**) to implement one or more of the following interventions to cause operations of the tool driving apparatuses (**7**) to be interrupted:
∘ notify the operators, via the electronic operator interfaces (**17**), of a need for operation of the tool driving apparatus (**7**) to be interrupted; and
∘ intervene directly on the tool driving apparatuses (**7**) to interrupt operation thereof.

8. The electronic tool management system (**1**) of any one of preceding claims **4** to **7**, wherein a tool collection and dispensing station (**3**) comprises:
- an electronic operator interface (**20**) through which operators can submit requests for tools (**5**) to perform mechanical machining operations;
- an electronic communication interface (**21**) to communicate with the electronic communication interface (**18**) of the tool management centre (**2**);
- a sensory arrangement (**22**) to allow returned tools (**5**) to be identified and usage thereof to be monitored; and
- an electronic control unit (**23**) configured to communicate with the electronic operator interface (**20**), the electronic communication interface (**21**) and the sensory device (**22**) and to manage collection and dispensing of tools (**5**) based on the requests for tools (**5**).

9. The electronic management system (**1**) of claim **8**, wherein the sensory arrangement (**22**) of a tool collection and dispensing station (**3**) comprises:
- a tag reader (**24**) to read unique identifiers (**ID**) of tags (**6**) associated with returned tools (**5**); and
- a tool scanning sensor (**25**) based on either imaging technology or laser technology to allow wears of the returned tools (**5**) to be estimated.

10. The electronic management system (**1**) of claim **8** or **9**, wherein the electronic control unit (**23**) of a tool collection and dispensing station (**3**) is configured to manage collection of returned tools (**5**) by:
- receiving and processing the output of the sensory arrangement (**22**) to identify the returned tools (**5**) and estimate wears thereof; and
- communicating with the tool management centre (**2**) to provide data indicative of the unique identifiers (**ID**) of the tags (**6**) associated with the returned tools (**5**) and of the wears thereof;
the electronic control unit (**23**) of a tool collection and dispensing station (**3**) is further configured to manage delivery of tools (**5**) by:
- receiving requests for tools (**5**) submitted by operators via the electronic operator interface (**20**) and each containing data identifying the operator who submitted the request, a mechanical machining operation to be performed, and a tool (**5**) to be used to carry out the indicated mechanical machining;
- verifying whether the requested tools (**5**) are suitable to perform the indicated mechanical machining operations and whether in the tool collection and dispensing station (**3**) tools (**5**) are available that match the requested ones and whose residual service lives are sufficient to perform the indicated mechanical machining operations;
- if it is determined either that the requested tools (**5**) are unsuitable to perform the indicated mechanical machining operations or that in the tool collection and dispensing station (**3**) no tools (**5**) are available that match the requested ones or that in the tool collection and dispensing station (**3**) tools (**5**) are available that match the requested ones but whose residual service lives are insufficient to perform the indicated mechanical machining operations:
∘ preventing the tool collection and dispensing station (**3**) from delivering the requested tools (**5**); and
∘ causing the operators who submitted the requests to be duly notified; and
- if it is determined that the requested tools (**5**) are suitable to perform the indicated mechanical machining operations and that in the tool collection and dispensing station (**3**) tools (**5**) are available that match the requested ones and whose residual service lives are sufficient to perform the indicated mechanical machining operations, causing the tool collection and dispensing station (**3**) to deliver the requested tools (**5**).

## Patentansprüche

1. Elektronisches Werkzeugüberwachungssystem (4) zur Überwachung des Gebrauchs und des Verschleißes von Werkzeugen (5) zur mechanischen Bearbeitung;
wobei das elektronische Werkzeugüberwachungssystem (4) für jedes Werkzeug (5), das überwacht werden soll, aufweist:
- ein Etikett (6), das auf das Werkzeug (5) aufgebracht wird und mit einer eindeutigen Kennung (ID), die ermöglicht, dass das Werkzeug (5) von anderen Werkzeugen (5) unterschieden wird; und
- eine abgeschlossene und selbständige elektronische Überwachungsvorrichtung (8), die derart konzipiert ist, dass sie fest und abnehmbar auf eine Werkzeugantriebsvorrichtung (7) anwendbar ist, um den Gebrauch und den Verschleiß eines von ihr angetriebenen Werkzeugs (5) zu überwachen;
wobei die abgeschlossene und selbständige elektronische Überwachungsvorrichtung (8) aufweist:
- eine elektronische Sensoranordnung (11), um zu ermöglichen, dass das Werkzeug (5) identifiziert wird und sein Gebrauch und sein Verschleiß überwacht werden;
- eine elektronische Kommunikationsschnittstelle (12), um mit einem entfernten Werkzeugverwaltungszentrum (2) zu kommunizieren;
- eine elektronische Bedienerschnittstelle (17), um einen Bediener mit Informationen über das Werkzeug (5) zu versehen; und
- eine elektronische Steuereinheit (14), die mit der elektronischen Sensoranordnung (11), der elektronischen Kommunikationsschnittstelle (12) und der elektronischen Bedienerschnittstelle (17) elektrisch verbunden ist und programmiert ist, um:
∘ Daten, die eine Nutzungsdauer des Werkzeugs (5) anzeigen, zu speichern,
∘ den Gebrauch und den Verschleiß des Werkzeugs (5) basierend auf einer Ausgabe der elektronischen Sensoranordnung (11) zu bestimmen und zu überwachen,
∘ die Restnutzungsdauer des Werkzeugs (5) basierend auf dem überwachten Gebrauch und dem Verschleiß des Werkzeugs (5) und auf den gespeicherten Daten, die seine Nutzungsdauer anzeigen, zu schätzen;
- wenn bestimmt wird, dass die Nutzungsdauer des Werkzeugs (5) nicht verbraucht ist, den Bediener über die elektronische Bedienerschnittstelle (17) mit Informationen über die Restnutzungsdauer des Werkzeugs (5) zu versehen;
- wenn bestimmt wird, dass die Nutzungsdauer des Werkzeugs (5) verbraucht ist, eine oder mehrere der folgenden Eingriffe zu implementieren, um zu bewirken, dass der Betrieb der Werkzeugantriebsvorrichtung (7) unterbrochen wird:
° den Bediener über die elektronische Bedienerschnittstelle (17) über eine Notwendigkeit, den Betrieb der Werkzeugantriebsvorrichtung (7) zu unterbrechen, zu benachrichtigen; und
∘ direkt an der Werkzeugantriebsvorrichtung (7) einzugreifen, um ihren Betrieb zu unterbrechen; und
- die eindeutige Kennung (ID) des zu dem Werkzeug (5) gehörenden Etiketts (6) und Daten, die entweder die geschätzte Restnutzungsdauer des Werkzeugs (5) oder den Verbrauch seiner Nutzungsdauer anzeigen, über die elektronische Kommunikationsschnittstelle (12) an das Werkzeugverwaltungszentrum (2) zu übertragen.

2. Elektronisches Werkzeugüberwachungssystem (4) nach Anspruch 1, wobei das Etikett (6) entweder auf Funkfrequenzidentifikations- (RFID-) Technologie oder optischer Abtasttechnologie, insbesondere Abbildungstechnologie, basiert, und wobei die elektronische Sensoranordnung (11) einen Etikettenleser (15) aufweist, um die zu dem Etikett (6) gehörende eindeutige Kennung (ID) basierend auf der Funkfrequenzidentifikations-(RFID-) Technologie oder optischer Abtasttechnologie, insbesondere Abbildungstechnologie, zu lesen.

3. Elektronisches Werkzeugüberwachungssystem (4) nach Anspruch 1 oder 2, wobei die Sensoranordnung (11) ferner einen oder eine Kombination der folgenden Messwertgeber aufweist, um zu ermöglichen, dass der Gebrauch und der Verschleiß des Werkzeugs (5) überwacht werden:
- einen elektroakustischen Wandler, um Schallemissionen zu messen, die von dem Werkzeug (5) während der mechanischen Bearbeitung erzeugt werden;
- einen Schwingungswandler, um mechanische Schwingungen zu messen, die von dem Werkzeug (5) während mechanischer Bearbeitung erzeugt werden;
- einen Näherungssensor, um den Abstand des Näherungssensors zu einer mechanischen Komponente, die mechanisch bearbeitet werden soll, zu messen;
- einen passiven Infrarotsensor, um die Wärmeenergie, die von dem Werkzeug (5) während mechanischer Bearbeitung in der Form von Infrarotstrahlung emittiert wird, zu messen,
- ein Gyroskop, um die Drehzahl des Werkzeugs (5) zu messen,
- eine Kraftmessdose, um die Kraft zu messen, die von dem Werkzeug (5) auf eine mechanische Komponente, die mechanisch bearbeitet wird, angewendet wird, und
- einen tastbaren Druckknopf, der von dem Bediener entweder am Anfang oder am Ende einer mechanischen Bearbeitung bedienbar ist oder der über diese hinweg gedrückt gehalten werden muss, um entweder die Zeitpunkte eines Starts und eines Endes der mechanischen Bearbeitung oder deren Dauer anzuzeigen.

4. Elektronisches Werkzeugverwaltungssystem (1), das aufweist:
- ein Werkzeugverwaltungszentrum (2);
- eine oder verschiedene Werkzeugsammel- und Abgabestationen (3), die mit dem Werkzeugverwaltungszentrum (2) kommunizieren; und
- das elektronische Werkzeugüberwachungssystem (4) nach einem der vorhergehenden Ansprüche für jedes Werkzeug (5), das überwacht werden soll.

5. Elektronisches Werkzeugverwaltungssystem (1) nach Anspruch 4, wobei das Werkzeugverwaltungszentrum (2) aufweist:
- eine elektronische Kommunikationsschnittstelle (18), um mit elektronischen Kommunikationsschnittstellen (12) elektronsicher Überwachungsvorrichtungen (8) zu kommunizieren, um Daten, die entweder die Restnutzungsdauer der überwachten Werkzeuge (5) oder deren Verbrauch anzeigen, die von den elektronischen Vorrichtungen (8) übertragen werden, zu empfangen, und mit elektronischen Kommunikationsschnittstellen (21) der Werkzeugsammei- und Abgabestationen (3), um von diesen übertragene Verschleißdaten zu empfangen;
- eine Werkzeugdatenbank (TDB); und
- eine elektronische Datenverarbeitungseinheit (19), die konfiguriert ist, um mit der elektronischen Kommunikationsschnittstelle (18) zu kommunizieren, um von dieser empfangene Daten zu empfangen, und um auf die Werkzeugdatenbank (TDB) zuzugreifen, und um mit den Werkzeugsammel- und Abgabestationen (3) zu kommunizieren, um das Sammeln und Abgeben der Werkzeuge (5) durch die Werkzeugsammel- und Abgabestationen (3) basierend auf den empfangenen Daten und auf in der Werkzeugdatenbank (TDB) gespeicherten Daten zu verwalten;
wobei die Werkzeugdatenbank (TDB) strukturiert ist, um für jedes von dem Werkzeugverwaltungszentrum (2) verwaltete Werkzeug Daten zu speichern, die anzeigen:
- die eindeutige Kennung (ID) des Werkzeugs (5),
- die Nutzungsdauer des Werkzeugs (5), nach deren Verbrauch das Werkzeug (5) einer Überholung unterzogen werden oder ansonsten entsorgt werden sollte,
- dir Restnutzungsdauer des Werkzeugs (5), die durch die zugehörige elektronische Überwachungsvorrichtung (8) übertragen wird, und
- die mechanischen Bearbeitungsvorgänge, für die das Werkzeug (5) geeignet ist,
- die Sammel- und Abgabestation (3), die der Aufgabe des Sammelns und Abgebens des Werkzeugs (5) zugewiesen ist, und
- jeglichen Mangel an Verfügbarkeit des Werkzeugs (5) aufgrund einer Überholung oder Entsorgung;
wobei die elektronische Datenverarbeitungseinheit (19) ferner konfiguriert ist, um:
- Daten, die von den elektronischen Überwachungsvorrichtungen (8) und von den Werkzeugsammel- und Abgabestationen (3) empfangen werden, zu verarbeiten, um Restnutzungsdauern der Werkzeuge (5) zu schätzen und die Überarbeitung und Entsorgung der Werkzeuge (5), deren Nutzungsdauern verbraucht sind, zu schätzen; und
- die Werkzeugdatenbank (TDB) mit den geschätzten Restnutzungsdauern der Werkzeuge (5) und Informationen über den Mangel an Verfügbarkeit der Werkzeuge (5) aufgrund einer Überholung oder Entsorgung zu aktualisieren.

6. Elektronisches Werkzeugverwaltungssystem (1) nach Anspruch 5, wobei die elektronische Datenverarbeitungseinheit (19) des Werkzeugverwaltungszentrums (2) ferner konfiguriert ist, um basierend auf künstlichen Intelligenz- (AI-) Algorithmen, die basierend auf den empfangenen Daten trainiert werden, auf die empfangenen Daten, jegliche Verlängerungen oder Verkürzungen der Nutzungsdauern der Werkzeuge (5) für alle oder einen Teil der mechanischen Bearbeitungsvorgänge, für welche die Werkzeuge (5) geeignet sind, zuzugreifen und um die Werkzeugdatenbank (TDB) entsprechend zu aktualisieren.

7. Elektronisches Werkzeugverwaltungssystem (1) nach Anspruch 5 oder 6, wobei die elektronische Datenverarbeitungseinheit (19) des Werkzeugverwaltungszentrums (2) ferner konfiguriert ist, um die Betriebsunterbrechungsbefehle an die elektronischen Überwachungsvorrichtungen (8) zu senden, die, wenn sie von den elektronischen Steuereinheiten (14) der elektronischen Überwachungsvorrichtungen (8) empfangen werden, bewirken, dass die elektronischen Steuereinheiten (14) einen oder mehrere der folgenden Eingriffe implementieren, um zu bewirken, dass die Betriebe der Werkzeugantriebsvorrichtungen (7) unterbrochen werden:
∘ die Bediener über die elektronischen Bedienerschnittstellen (17) über eine Notwendigkeit zu benachrichtigen, dass der Betrieb der Werkzeugantriebsvorrichtung (7) unterbrochen werden muss; und
∘ direkt an den Werkzeugantriebsvorrichtungen (7) einzugreifen, um deren Betrieb zu unterbrechen.

8. Elektronisches Werkzeugverwaltungssystem (1) nach einem der vorhergehenden Ansprüche 4 bis 7, wobei eine Werkzeugsammel- und Abgabestation (3) aufweist:
- eine elektronische Bedienerschnittstelle (20), durch welche Bediener Anfragen nach Werkzeugen (5) stellen können, um mechanische Bearbeitungsvorgänge durchzuführen;
- eine elektronische Kommunikationsschnittstelle (21), um mit der elektronischen Kommunikationsschnittstelle (18) des Werkzeugverwaltungszentrums (2) zu kommunizieren;
- eine Sensoranordnung (22), um zu ermöglichen, dass zurückgegebene Werkzeuge (5) identifiziert werden und ihr Gebrauch überwacht wird, und
- eine elektronische Steuereinheit (23), die konfiguriert ist, um mit der elektronischen Bedienerschnittstelle (20), der elektronischen Kommunikationsschnittstelle (21) und der Sensoranordnung (22) zu kommunizieren und um das Sammeln und Abgeben von Werkzeugen (5) basierend auf den Anfragen nach Werkzeugen (5) zu verwalten.

9. Elektronisches Verwaltungssystem (1) nach Anspruch 8, wobei die Sensoranordnung (22) einer Werkzeugsammel- und Abgabestation (3) aufweist:
- einen Etikettenleser (24) um eindeutige Kennungen (ID) von Etiketten (6), die zu zurückgegebenen Werkzeugen (5) gehören, zu lesen; und
- einen Werkzeugabtastsensor (25) entweder basierend auf Abbildungstechnologie oder Lasertechnologie, um zu ermöglichen, dass der Verschleiß zurückgegebener Werkzeuge (5) geschätzt wird.

10. Elektronisches Verwaltungssystem (1) nach Anspruch 8 oder 9, wobei die elektronische Steuereinheit (23) einer Werkzeugsammel- und Abgabestation (3) konfiguriert ist, um das Sammeln der zurückgegebenen Werkzeuge (5) zu verwalten durch:
- Empfangen und Verarbeiten der Ausgabe der Sensoranordnung (22), um die zurückgegebenen Werkzeuge (5) zu identifizieren und ihren Verschleiß zu schätzen; und
- Kommunizieren mit dem Werkzeugverwaltungszentrum (2), um Daten bereitzustellen, welche die eindeutigen Kennungen (ID) der Etiketten (6), die zu den zurückgegebenen Werkzeugen (5) gehören, und deren Verschleiß anzeigen;
wobei die elektronische Steuereinheit (23) einer Werkzeugsammel- und Abgabestation (3) ferner konfiguriert ist, um die Lieferung von Werkzeugen (5) zu verwalten durch:
- Empfangen von Anfragen nach Werkzeugen (5), die von Bedienern über die elektronische Bedienerschnittstelle (20) gestellt werden, die jeweils Daten enthalten, die den Bediener, der die Anfrage gestellt hat, einen mechanischen Bearbeitungsvorgang, der durchgeführt werden soll, und ein Werkzeug (5), das verwendet werden soll, um die angezeigte mechanische Bearbeitung auszuführen, identifizieren;
- Verifizieren, ob die angefragten Werkzeuge (5) geeignet sind, um die angezeigten mechanischen Bearbeitungsvorgänge durchzuführen, und ob in der Werkzeugsammel- und Abgabestation (3) Werkzeuge (5) verfügbar sind, die mit den angefragten übereinstimmen und deren Restnutzungsdauern ausreichen, um die angezeigten mechanischen Bearbeitungsvorgänge durchzuführen;
- wenn bestimmt wird, dass die angefragten Werkzeuge (5) entweder ungeeignet sind, um die angezeigten mechanischen Bearbeitungsvorgänge durchzuführen, oder dass in der Werkzeugsammel- und Abgabestation (3) keine Werkzeuge (5) verfügbar sind, die mit den angefragten übereinstimmen, oder dass in der Werkzeugsammel- und Abgabestation (3) Werkzeuge (5) verfügbar sind, die mit den angefragten übereinstimmen, aber ihre Restnutzungsdauern unzureichend sind, um die angezeigten mechanischen Bearbeitungsvorgänge durchzuführen:
∘ Verhindern, dass die Werkzeugsammel- und Abgabestation (3) die angefragten Werkzeuge liefert; und
∘ Bewirken, dass die Bediener, welche die Anfragen gestellt haben, ordnungsgemäß benachrichtigt werden; und
- wenn bestimmt wird, dass die angefragten Werkzeuge (5) geeignet sind, um die angezeigten mechanischen Bearbeitungsvorgänge durchzuführen, und dass in der Werkzeugsammel- und Abgabestation (3) Werkzeuge (5) verfügbar sind, die mit den angefragten übereinstimmen und deren Restnutzungsdauern ausreichend sind, um die angezeigten mechanischen Bearbeitungsvorgänge durchzuführen, Bewirken, dass die Werkzeugsammel- und Abgabestation (3) die angefragten Werkzeuge (5) liefert.

## Revendications

1. Système de surveillance d'outils électronique (4) pour surveiller l'usage et l'usure d'outils (5) pour un usinage mécanique ;
le système de surveillance d'outils électronique (4) comprend, pour chaque outil (5) devant être surveillé :
- une étiquette (6) devant être appliquée à l'outil (5) et avec un identifiant unique (ID) qui permet à l'outil (5) d'être distingué d'autres outils (5) ; et
- un dispositif de surveillance électronique (8) autonome et indépendant conçu pour être applicable solidement et de manière amovible à un appareil d'entraînement d'outil (7) pour surveiller l'usage et l'usure d'un outil (5) commandé par celui-ci ;
le dispositif de surveillance électronique (8) autonome et indépendant comprend :
- un agencement sensoriel électronique (11) pour permettre à l'outil (5) d'être identifié et d'être surveillé à l'usage et l'usure de celui-ci ;
- une interface de communication électronique (12) pour communiquer avec un centre de gestion d'outils (2) distant ;
- une interface opérateur électronique (17) pour fournir à un opérateur des informations sur l'outil (5) ; et
- une unité de commande électronique (14) connectée électriquement à l'agencement sensoriel électronique (11), à l'interface de communication électronique (12) et à l'interface opérateur électronique (17) et programmée pour :
∘ stocker des données indiquant une durée de vie de l'outil (5),
∘ identifier et surveiller l'usage et l'usure de l'outil (5) sur la base d'une sortie de l'agencement sensoriel électronique (11),
∘ estimer une durée de vie résiduelle de l'outil (5) sur la base de l'usage et l'usure surveillés de l'outil (5) et des données stockées indiquant la durée de vie de celui-ci ;
- si la durée de vie de l'outil (5) est déterminée comme n'étant pas épuisée, fournir à l'opérateur des informations sur la durée de vie résiduelle de l'outil (5) via l'interface opérateur électronique (17) ;
- si la durée de vie de l'outil (5) est déterminée comme étant épuisée, réaliser une ou plusieurs des interventions suivantes pour amener une opération de l'appareil d'entraînement d'outil (7) à être interrompue :
∘ notifier à l'opérateur, via l'interface opérateur électronique (17), un besoin qu'une opération de l'appareil d'entraînement d'outil (7) soit interrompue ; et
∘ intervenir directement sur l'appareil d'entraînement d'outil (7) pour interrompre une opération de celui-ci ; et
- transmettre au centre de gestion d'outils (2), via l'interface de communication électronique (12), l'identifiant unique (ID) de l'étiquette (6) associée à l'outil (5) et des données indiquant soit la durée de vie résiduelle estimée de l'outil (5) soit l'épuisement de la durée de vie de celui-ci.

2. Système de surveillance d'outils électronique (4) selon la revendication 1, dans lequel l'étiquette (6) est basée soit sur une technologie d'identification par radiofréquence (RFID) soit sur une technologie de balayage optique, en particulier une technologie d'imagerie, et l'agencement sensoriel électronique (11) comprend un lecteur d'étiquettes (15) pour lire l'identifiant unique (ID) associé à l'étiquette (6) et basé sur une technologie d'identification par radiofréquence (RFID) ou, respectivement, une technologie de balayage optique, en particulier une technologie d'imagerie.

3. Système de surveillance d'outils électronique (4) selon la revendication 1 ou 2, dans lequel l'agencement sensoriel électronique (11) comprend en outre un ou une combinaison des transducteurs suivants pour permettre à l'usage et l'usure de l'outil (5) d'être surveillés :
- un transducteur électroacoustique pour mesurer des émissions sonores produites par l'outil (5) durant un usinage mécanique ;
- un transducteur de vibrations pour mesurer des vibrations mécaniques produites par l'outil (5) durant un usinage mécanique ;
- un capteur de proximité pour mesurer la distance du capteur de proximité à un élément mécanique devant être usiné mécaniquement ;
- capteur infrarouge passif pour mesurer une énergie thermique émise sous la forme d'un rayonnement infrarouge par l'outil (5) durant un usinage mécanique,
- un gyroscope pour mesurer une vitesse de rotation de l'outil (5),
- un capteur dynamométrique pour mesurer une force appliquée par l'outil (5) sur un élément mécanique en train d'être usiné mécaniquement, et
- un bouton tactile utilisable par un opérateur soit à un début et à une fin d'un usinage mécanique soit pour être maintenu enfoncé tout au long de ceux-ci pour indiquer soit les moments dans le temps d'un début et d'une fin de l'usinage mécanique soit une durée de ceux-ci.

4. Système de gestion (1) d'outils électronique comprenant :
- un centre de gestion d'outils (2) ;
- un ou différents postes de collecte et de distribution (3) d'outils en communication avec le centre de gestion d'outils (2) ; et
- un système de surveillance d'outils électronique (4) selon l'une quelconque des revendications précédentes et pour chaque outil (5) devant être surveillé.

5. Système de gestion (1) d'outils électronique selon la revendication 4, dans lequel le centre de gestion d'outils (2) comprend :
- une interface de communication électronique (18) pour communiquer avec des interfaces de communication électroniques (12) de dispositifs de surveillance électroniques (8) pour recevoir des données indiquant soit la durée de vie résiduelle des outils (5) surveillés soit l'épuisement de la durée de vie de ceux-ci et transmises par les dispositifs de surveillance électroniques (8), et avec des interfaces de communication électroniques (21) des postes de collecte et de distribution (3) d'outils pour recevoir des données d'usure transmises par ceux-ci ;
- une base de données d'outils (TDB) ; et
- une unité de traitement de données électronique (19) configurée pour communiquer avec l'interface de communication électronique (18) pour recevoir des données reçues par celle-ci et pour accéder à la base de données d'outils (TDB), et pour communiquer avec les postes de collecte et de distribution (3) d'outils pour gérer une collecte et une distribution des outils (5) par les postes de collecte et de distribution (3) d'outils sur la base des données reçues et de données stockées dans la base de données d'outils (TDB) ;
la base de données d'outils (TDB) est structurée pour stocker, pour chaque outil (5) géré par le centre de gestion d'outils (2), des données indiquant :
- l'identifiant unique (ID) de l'outil (5),
- la durée de vie de l'outil (5), après l'épuisement de laquelle l'outil (5) devrait être soumis à une remise en état ou sinon éliminé,
- la durée de vie résiduelle de l'outil (5) transmise par le dispositif de surveillance électronique (8) associé, et
- les opérations d'usinage mécanique pour lesquelles l'outil (5) est approprié,
- le poste de collecte et de distribution (3) qui est assigné à la tâche de collecte et de distribution de l'outil (5), et
- tout manque de disponibilité de l'outil (5) en raison d'une remise en état ou d'une élimination ;
l'unité de traitement de données électronique (19) est en outre configurée pour :
- traiter des données reçues à partir des dispositifs de surveillance électroniques (8) et à partir des postes de collecte et de distribution (3) d'outils pour estimer des durées de vie résiduelles des outils (5) et pour gérer une remise en état et une élimination des outils (5) dont les durées de vie sont épuisées ; et
- tenir la base de données d'outils (TDB) à jour avec les durées de vie résiduelles estimées des outils (5) et des informations sur un manque de disponibilité des outils (5) en raison d'une remise en état ou d'une élimination.

6. Système de gestion (1) d'outils électronique selon la revendication 5, dans lequel l'unité de traitement de données électronique (19) du centre de gestion d'outils (2) est en outre configurée pour accéder, sur la base d'algorithmes d'intelligence artificielle (IA) entraînés sur la base des données reçues, à de quelconques extensions ou raccourcissements des durées de vie des outils (5) pour tout ou partie des opérations d'usinage mécanique pour lesquelles les outils (5) sont appropriés et pour mettre à jour la base de données d'outils (TDB) en conséquence.

7. Système de gestion (1) d'outils électronique selon la revendication 5 ou 6, dans lequel l'unité de traitement de données électronique (19) du centre de gestion d'outils (2) est en outre configurée pour envoyer aux dispositifs de surveillance électroniques (8) des instructions d'interruption d'opération qui, lorsqu'elles sont reçues et exécutées par les unités de commande électroniques (14) des dispositifs de surveillance électroniques (8), amènent les unités de commande électroniques (14) à réaliser une ou plusieurs des interventions suivantes pour amener des opérations des appareils d'entraînement d'outils (7) à être interrompues :
∘ notifier aux opérateurs, via les interfaces opérateur électroniques (17), un besoin qu'une opération des appareils d'entraînement d'outils (7) soit interrompue ; et
∘ intervenir directement sur les appareils d'entraînement d'outils (7) pour interrompre une opération de ceux-ci.

8. Système de gestion (1) d'outils électronique selon l'une quelconque des revendications précédentes 4 à 7, dans lequel un poste de collecte et de distribution (3) d'outils comprend :
- une interface opérateur électronique (20) par le biais de laquelle des opérateurs peuvent soumettre des demandes pour que des outils (5) effectuent des opérations d'usinage mécanique ;
- une interface de communication électronique (21) pour communiquer avec l'interface de communication électronique (18) du centre de gestion d'outils (2) ;
- un agencement sensoriel (22) pour permettre à des outils (5) rapportés d'être identifiés et à l'usage de ceux-ci d'être surveillé ; et
- une unité de commande électronique (23) configurée pour communiquer avec l'interface opérateur électronique (20), l'interface de communication électronique (21) et le dispositif sensoriel (22) et pour gérer une collecte et une distribution d'outils (5) sur la base de demandes pour des outils (5).

9. Système de gestion (1) électronique selon la revendication 8, dans lequel l'agencement sensoriel (22) d'un poste de collecte et de distribution (3) d'outils comprend :
- un lecteur d'étiquettes (24) pour lire des identifiants uniques (ID) d'étiquettes (6) associés à des outils (5) rapportés ; et
- un capteur de balayage d'outils (25) sur la base soit d'une technologie d'imagerie soit d'une technologie laser pour permettre à des usures des outils (5) rapportés d'être estimées.

10. Système de gestion (1) électronique selon la revendication 8 ou 9, dans lequel l'unité de commande électronique (23) d'un poste de collecte et de distribution (3) d'outils est configurée pour générer une collecte d'outils (5) rapportés en :
- recevant et traitant la sortie de l'agencement sensoriel (22) pour identifier les outils (5) rapportés et estimer des usures de ceux-ci ; et
- communiquant avec le centre de gestion d'outils (2) pour fournir des données indiquant les identifiants uniques (ID) des étiquettes (6) associées aux outils (5) rapportés et les usures de ceux-ci ;
l'unité de commande électronique (23) d'un poste de collecte et de distribution (3) d'outils est en outre configurée pour gérer une remise d'outils (5) en :
- recevant des demandes pour des outils (5) soumises par des opérateurs via l'interface opérateur électronique (20) et chacune contenant des données identifiant l'opérateur qui a soumis la demande, une opération d'usinage mécanique devant être effectuée, et un outil (5) devant être utilisé pour procéder à l'usinage mécanique indiqué ;
- vérifiant si les outils (5) demandés sont appropriés pour effectuer les opérations d'usinage mécanique indiquées et si dans le poste de collecte et de distribution (3) d'outils des outils (5) sont disponibles à ceux demandés et dont les durées de vie résiduelles sont suffisantes pour effectuer les opérations d'usinage mécanique indiquées ;
- s'il est déterminé soit que les outils (5) demandés sont inappropriés pour effectuer les opérations d'usinage mécanique indiquées soit que dans le poste de collecte et de distribution (3) d'outils il n'y a pas d'outils (5) disponibles qui correspondent à ceux demandés soit que dans le poste de collecte et de distribution (3) d'outils des outils (5) sont disponibles qui correspondent à ceux demandés mais dont les durées de vie résiduelles sont insuffisantes pour effectuer les opérations d'usinage mécanique indiquées :
∘ empêchant le poste de collecte et de distribution (3) d'outils de remettre les outils (5) demandés ; et
∘ amenant les opérateurs qui ont soumis les demandes à être dûment notifiés ; et
- s'il est déterminé que les outils (5) demandés sont appropriés pour effectuer les opérations d'usinage mécanique indiquées et que dans le poste de collecte et de distribution (3) d'outils des outils (5) sont disponibles qui correspondent à ceux demandés et dont les durées de vie résiduelles sont suffisantes pour effectuer les opérations d'usinage mécanique indiquées, amenant le poste de collecte et de distribution (3) d'outils à remettre les outils (5) demandés.
